# EUROPEAN PATENT APPLICATION

(11) **EP 1 950 034 A1**
(43) Date of publication of application: **30.07.2008**
(21) Application number: 08386002.3
(22) Date of filing: 23.01.2008
(51) Int. Cl.: B29D 24/00, B29D 31/00, B29C 70/20, B32B 37/14, B29C 70/14, B29C 70/54, B29C 70/56, C08J 5/00, E04C 2/20, E04C 2/296, E04C 2/36

(54) **Multilayered honeycomb panel from compopsite material with continuous three-dimensinal reinforcement**

(30) Priority: 23.01.2007 GR 20070100034
(71) Applicant: Pavlos, Michelis, 152 36 Penteli Atikis (GR)
(72) Inventor: Pavlos, Michelis, 152 36 Penteli Atikis (GR)

(57) **Abstract**

Multilayered honeycomb panel (5) composed of a honeycomb core (3) and two skins (4) from composite material with glass or carbon fibers in a thermoplastic polymer matrix. The honeycomb core (3) is made from a single tape from the same composite material wound in successive layers thus forming a characteristic grid shape which is composed of equilateral triangles. In the triangular gaps formed by the winding of the longitudinal reinforcement (1) triangular prismatic cells are bonded made from the same material with fiber reinforcement at ±45° to the vertical thus forming the honeycomb core through autogenous bonding. On both flat surfaces of this core two skins (4) made from the same U-D reinforced material are placed and bonded again autogenously forming the desired panel. Further reinforcement of the matrix can be achieved with the insertion of suitably arranged carbon nanotubes. Due to the materials, the geometry and the manufacturing method the proposed panel exhibits higher shear, flexural and compressive strength to weight ratio than the existing panels with similar reinforcement.

## Description

This invention refers to multilayered honeycomb panels and shells made of composite material with fibers (i.e. glass or carbon) in polymer matrix, which are used as structural machine or engineering structure components particularly in the field of aerospace technology.

These panels and shells are characterized mainly by their high flexural strength and stiffness, low density and exceptional resistance to fatigue. They are composed of a core, which is usually of a closed hexagonal cellular shape and two skins from fiber reinforced polymer material bonded on the core with a suitable adhesive. Due to its layered structure (core between two skins) they are called multilayered panels or sandwich panels.

Due to their obvious advantages over metallic laminated or bulk materials, the use of these materials quickly became widespread and popular not only in the aerospace field, but also in the automotive industry and recently in civil engineering applications. However, a number of failures has been reported from their use and closer study of their mechanical behaviour has revealed the following shortcomings:
• Delamination at the core-skin interface. This is attributed to the fact that the skins are usually bonded onto the core with a low strength epoxy adhesive and to the fact that the small contact surface between the core and the flat skins gives rise to considerable stress concentration at the contact points. Also this kind of bonding is particularly sensitive to fatigue caused by high frequency vibrations.
• Medium impact resistance. The limited resistance of the existing honeycomb panels / shells to indentation from fast-moving projectiles can be attributed to two reasons: The first is that the core which occupies most of the thickness of the panel presents negligible resistance and the second is the low adhesion between the core and the skin that was mentioned before which multiplies the extent of the local damage caused particularly at the exit point of the projectile.
• Low in-plane shear strength. Despite their high flexural strength, the existing honeycomb shells do not exhibit high in-plane shear strength. The core offers little resistance in this kind of loading which results in stressing the skins which are not designed to endure shearing.
• Weak directions within the core itself (anisotropic behavior). According to the prevailing method of manufacturing fibre - reinforced composite honeycomb cores, tapes of U-D reinforced composite material pass through corrugated cylinders and series of corrugated half-cells is formed. The desired honeycomb geometry results by bonding (with adhesives or riveting) these series of half-cells in parallel rows. The resulting structure presents weak directions in terms of strength and stiffness within the core itself, i.e. 'reinforced' directions parallel to the direction of the rolling and 'weak' directions in the perpendicular direction in which the strength and stiffness is provided only by the adhesive and not by the fibers. At this point it is worth mentioning that the strength of the fibers is two orders of magnitude higher than the strength of the adhesive.
• High cost of manufacture and high cost of repair if the skins are destroyed. The heterogeneous bonding with epoxy glue occurring during the manufacture or the repair of the panel requires both specialized personnel and time (from many hours to a few days for the necessary curing of the adhesive).
• Low exploitation of the high fiber strength due to the large mismatch between the mechanical properties of the reinforcing fibers and the matrix material in terms of both strength and rigidity. This mismatch results in stress concentration and in low interfacial strength between the fibers and the polymer matrix to which a number of observed failures can be attributed.

The proposed invention is a composite isogrid sandwich panel reinforced along all of its principal directions with a single, integrated, stretched reinforcing yarn. The manufacturing concept of the panel is based on the autogenous bonding of the thermoplastic polymer with which the reinforcing fibres are impregnated without the intervention of another binding material (i.e. adhesive, rivets, bolts, etc.) The autogenous bonding of the adjacent layers in contact is achieved through the simultaneous heating and pressing of the contact area causing local melting hence bonding of the thermoplastic polymer. Further reinforcement of the thermoplastic matrix is achieved by the incorporation of carbon nanotubes which promote multiple cross-linking of the polymer molecular chains resulting in increased strength.

The isogrid core is formed by the winding of a single tape made of fibers impregnated with thermoplastic polymer in successive layers along the thickness in directions of 0°, +60°, -60° thus forming equilateral triangles. The winding of this tape which forms the longitudinal reinforcement is realized with the help of suitably placed pins (winding mandrels) on a frame mold with the shape of the external contour of the panel. During the winding of the longitudinal reinforcement a slight pretension is always applied.

In the triangular gaps formed during the winding of the preform triangular prismatic cells are inserted made from the same polymer material reinforced with fibres running at 45°

In the triangular gaps created by the successive layers of the longitudinal reinforcement, triangular prismatic cells made of the same polymer material reinforced with fibers running in a direction inclined at 45° to the edges of the prism. Using the above-described autogenous bonding technique, these cells are bonded onto the longitudinal reinforcement preform without the use of an adhesive thus forming an exceptionally reinforced unified core.

The triangular prismatic cells are fabricated through winding and simultaneous autogenous bonding under temperature and pressure of a tape made of the same fiber - reinforced thermoplastic polymer at an angle of ±45° on a metallic triangular mold. Afterwards they are cut at their precise length and folded at one end so that they form one of the bases of the triangular prism. The cells are placed with their closed base facing up and down in tum so that finally half of the core surface is covered by material.

In order to create the composite honeycomb panel, the skins (sheets made of the same thermoplastic material with U-D reinforcement) are placed on both sides of the core and are subjected to heating and pressure thus achieving high adhesion due to the increased core-skin contact surface (solid bases of half of the triangular prismatic cells).

The panel described in this report achieves higher strength to weight ratio in shearing, tension, compression and bending than other existing honeycomb panels with similar reinforcement. This is achieved through a number of design novelties such as:
• The use of the isogrid core geometry yielding maximum strength at low density.
• The integral structure of the longitudinal reinforcement (preform) of the core along all principal directions with using a single tape.
• The use of reinforcing prismatic cells with fibers placed at an angle of 45° with respect to the longitudinal reinforcement.
• The high strength in bending, compression and shearing achieved through the use of high strength and highly reinforced thermoplastic polymers.
• The absence of weak heterogeneous bonds and the simplicity of the structure.
   The use of slightly stretched yarns during winding of the preform so that the structure exhibits high stiffness even at light loads.
• The high operational temperature of the selected thermoplastic material (up to 260° C for PEEK) and the elevated resistance to fatigue and solar radiation.
• The ability to achieve high fiber content per thermoplastic matrix volume (up to 60% for S2 glass - fibers) with the use of thin tapes, thus achieving higher strength.
• The possibility of easy, quick and repeatable local repairing due to the higher strength and to the ability of the used thermoplastic material to bond autogenously with the application of local heating and pressure.
• Exceptionally high skin-core Delamination resistance and better damping properties due to the continuous crossing reinforcement in various directions and the high available contact surface between the core and the skins.
• Smaller difference in the mechanical strength of the matrix and the fibers by using high strength thermoplastic polymers reinforced with carbon nanotubes.

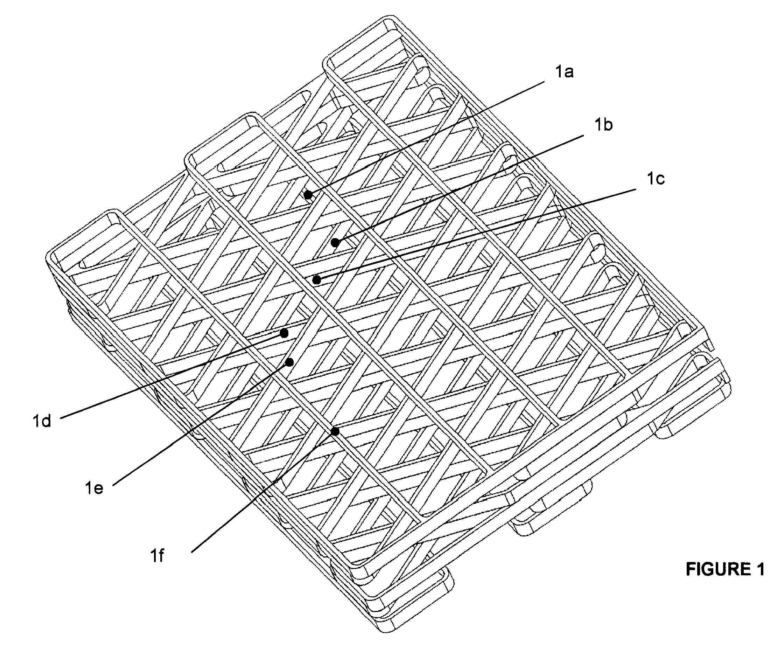

With reference to the attached drawings, the winding of the longitudinal reinforcement (1) around pins integrated in a frame (mold) gives the preform illustrated in Figure 1. The number of consecutive layers depends on the required panel thickness and the width of the fibre - reinforced tape. In Fig. 1, six (6) consecutive layers (1a to 1f) made of the same single - yarn at directions 0°, +60°, -60°, -60°, +60°, 0° respectively along the thickness. The thickness of the fiber - reinforced tape impregnated with the polymer matrix is the minimum required to achieve bonding with the adjacent prismatic triangular reinforcing cells (2) without leaving any gaps.

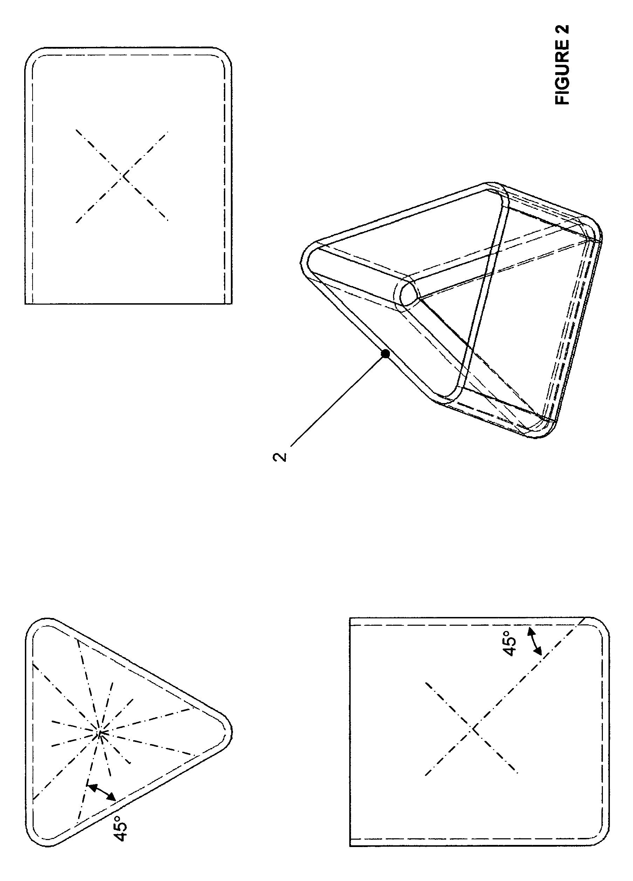

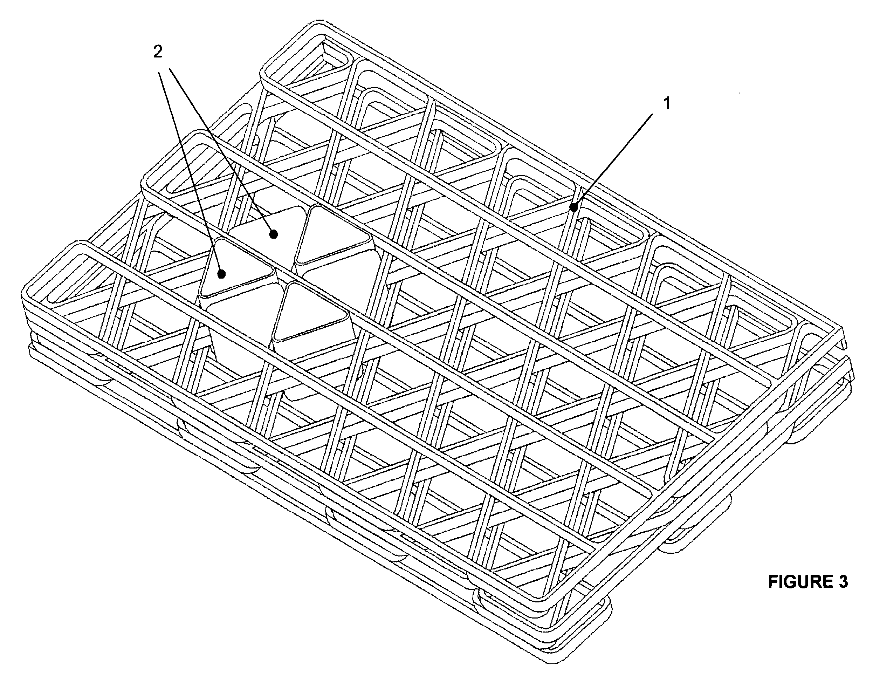

The shape of the triangular prismatic cells (2) is illustrated in Figure 2. As described above, only one base of the triangular prism is closed (filled) and the reinforcement has been placed at an angle of ±45° to the vertical in order to obtain maximum shear strength. In Figure 2 the direction of the reinforcement on the sides and the filled base of the prism is shown with a thin center dotted line. The triangular reinforcing cells are placed inside the triangular gaps of the longitudinal reinforcement preform (1) with their closed base up and down in succession as illustrated in Figure 3.

In Figure 3 the complete isogrid core comprising preform (1) and triangular cell (2) described above is shown.

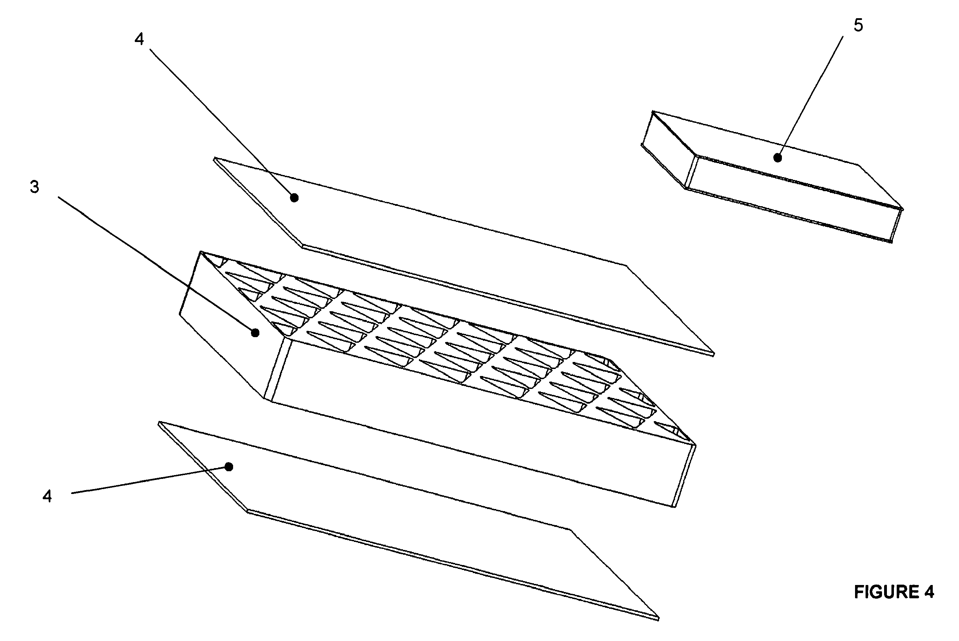

In Figure 4 the assembly of the composite panel (5) is illustrated composed of the isogrid core (3) and the two face skins (4), bonded with the method described in the previous paragraphs

## Claims

1. Honeycomb core (3) of isogrid geometry from composite material with glass or carbon fibers in thermoplastic polymer matrix comprising longitudinal stretched reinforcement from uni-directional (U-D) fiber reinforced thermoplastic polymer tape arranged in successive layers at 0°, +60°, -60° (1) thus forming a grid of equilateral triangles and triangular prismatic cells with one base (2) from the same polymer material reinforced with fibers running at ±45° to the vertical. The cells (2) are placed at the gaps of the longitudinal reinforcement (1) with their filled base either looking upwards or downwards in succession and are bonded onto it autogenously using heat and pressure thus making an integrated core.

2. Multilayered honeycomb panel (5) comprising of the honeycomb core of claim 1 on which two skins (4) from the same composite material with U-D reinforcement. The bonding of the skins onto the core is realized also with autogenous bonding without the help of any other additional adhesive compound.

3. Panel (3) of claim 2 in which the thermoplastic matrix material is reinforced with carbon nanotubes for increasing the strength and the stiffness.
